# EUROPEAN PATENT SPECIFICATION

(11) **EP 0 395 753 B1**
(45) Date of publication and mention of the grant of the patent: **12.01.1994**
(21) Application number: 90900466.5
(22) Date of filing: 13.11.1989
(51) Int. Cl.: A23L 1/307, A23L 1/308, A23L 1/24

(54) **FOOD EMULSION PRODUCTS INCLUDING HEMICELLULOSE**
NÄHRMITTELEMULSIONSERZEUGNISSE EINSCHLIESSLICH HEMICELLULOSE
PRODUITS ALIMENTAIRES D'EMULSION COMPRENANT DE L'HEMICELLULOSE

(30) Priority: 16.11.1988 US 272141
(43) Date of publication of application: 07.11.1990
(73) Proprietor: THE NUTRASWEET COMPANY, Deerfield, IL 60015 (US)
(72) Inventor: LIAO, Shyhyuan, Schaumburg, IL 60196 (US)
(74) Representative: Werner, Hans-Karsten, Dr.Dipl.-Chem.
(86) International application number: US8905123
(87) International publication number: WO9005460

(56) References cited:
- DD-A- 102 073
- DD-A- 220 895
- FR-A- 2 431 862
- FR-A- 2 518 372
- US-A- 4 526 794
- US-A- 4 565 702
- US-A- 4 698 232
- US-A- 4 714 620

## Description

### Background of the Invention

This invention relates to the field of low fat emulsion food products such as mayonnaise, salad dressings, butter, cheeses, whipped cream substitutes, dips, sour cream, spreads, and sauces.

Emulsion food products such as those listed above have widespread popularity. For most uses, a smooth consistent texture is desirable, so phase separation is preferably minimized.

The emulsion food products listed above typically have high fat content due to ingredients such as eggs and oil. Fat content has been lowered by substitution of various constituents, for example, xanthan gums. However, for a desirable commercial product, other properties are important. A stable emulsion must be formed which will remain in emulsion form during transportation and storage. Rheological properties such as consistency coefficient and flow behavior index are also important, as people generally expect new products to have the consistency and flow properties of known emulsion products. Taste must also be relatively similar to the taste found in conventionally available products.

FR-A-2 518 372 discloses a food composition comprising 10 - 30 parts per weight of fibres, selected from cellulose and hemicellulose.

### Summary of the Invention

This invention is the use of hemicellulose in food emulsion products. The hemicellulose is used as a substitute for fat, oil, or eggs in order to produce a low-fat product which has rheological properties as well as taste similar to known products.

### Detailed Description of the Preferred Embodiment

This invention relates to low-fat food emulsion products containing hemicellulose. The emulsion products include, but are not limited to, mayonnaise substitutes, salad dressings, cheese substitutes, butter substitutes, sour cream substitutes, dips, spreads, and sauces.

When used herein, the term "hemicellulose" means any polymers of xylose, arabinose, galactose, glucose, mannose, other sugar and their uronic acids having molecular weights in the range of from about 5,000 to about 4,000,000. Hemicelluloses do not occur as homoglycans but rather as heteroglycans containing different types of sugar residues, often as short appendages linked to the main backbone chain. Typical examples of hemicelluloses include L-arabino-D-xylan, D-glucurono-D-xylan, L-arabino-D-glucurono-D-xylan from wheat and rye; B-glucans from oat and barley, and arabinogalactans. Hemicelluloses are commonly classified as "Hemicellulose A" and "Hemicellulose B." Hemicellulose A and Hemicellulose B are the hemicelluloses obtained from an acidified hemicellulose mixture which had previously been isolated from plant material by extraction with alkaline solutions. Hemicellulose B contains most of the water soluble portion; Hemicellulose A contains most of the water insoluble portion. Hemicellulose B is especially preferred for the purposes of the invention because water solubility and suspensibility may he desirable for some applications. Mixtures of Hemicellulose A and Hemicellulose B may be used for any applications, as well as any mixtures including Hemicellulose A or Hemicellulose B modified by enzymatic treatment ("Modified Hemicellulose A" and "Modified Hemicellulose B").

Hemicellulose is obtained from any lignocellulosic substrate, but preferably non-woody lignocellulosic substrates. Suitable substrates include corn bran, corn stover, corn cobs, wheat bran, sugar cane bagasse, alfalfa hay, barley bran, barley hulls, oat bran, oat hulls, kenaf, western larch heartwood chips, rice bran, sugar beet pulp, citrus pulp, citrus peel, peanut shells, banana peels, okra stover, soybean stover, and esparto grass. Hemicellulose may be extracted by any one of a number of conventional methods; for example, acid, alkaline, high pressure, high temperature, or high shear extraction followed by ultrafiltration, centrifugation, spray drying or freeze drying. Hemicellulose may also he modified by enzymatic treatment.

One example of a typical extraction procedure of hemicellulose from wheat bran is exemplified below. First, wheat bran is pretreated with dilute acid (0.05-0.20 N hydrochloric acid) or enzymes (e.g. amylases, proteases) to remove starch, ash, and proteins. The bran is then extracted with alkali solutions (0.25 N-4.00 N NaOH, KOH, NH₄OH, or Ca(OH)₂) for 2-24 hours. The solution shall be filtered or centrifuged to isolate the bran. The pH of the bran should be preferably adjusted to about 4.5. Hemicellulose is then isolated by precipitation in ethanol or ultrafiltration followed by spray drying, vacuum drying, or lyophilization.

Some of the properties of hemicellulose may vary, depending on the substrate and extraction method. For example, the polymer's molecular chain length, ratio of monomeric sugar, viscosity, water holding capacity, foaming ability, and emulsifying ability may vary. Plus, proteins and polysaccharides may remain in an extracted hemicellulose product. A desired hemicellulose will have less than 40% impurities (ash, protein, fat, etc.), and preferably less than 20% impurities. Hemicelluloses extracted from wheat, corn, barley, oats and other cereal crops are preferred due to their availability and current use as food products, as well as their generally low levels of impurities needing removal.

There is a direct correlation between the molecular weight of hemicellulose and its viscosity. In turn, the viscosity directly affects emulsion formation and stability. High viscosity results in the quick formation of a stable emulsion. A stable emulsion may be formed using hemicellulose at the low end of the molecular weight range, but a greater quantity of hemicellulose must be used to achieve satisfactory results. The range of molecular weights of hemicellulose also allows its use as a replacement for both saturated and unsaturated fats. Hemicellulose can be added to produce emulsions in a wide range of liquid, semi-solid, and solid forms.

A food emulsion is a heterogenous system in which one liquid is dispersed in a second liquid. The first liquid, which is immiscible with the second liquid, is the discontinuous phase, and will be present in the form of finite droplets, while the second liquid is the continuous phase. The hemicellulose may be the continuous or discontinuous phase in the food products. For example, in mayonnaise substitutes, the hemicellulose is the continuous phase. When the hemicellulose is the continuous phase, it should he added in hydrated aqueous form.

Hemicelluloses generally form stable emulsions, as the interfacial tension between the hemicellulose and other liquid is typically lower than between the liquid and the fats which hemicellulose replaces. When hemicellulose is present, the use of emulsifiers, typically required in food emulsion systems due to emulsion instability, can be lessened.

Typically, hemicellulose will be used at a level of 1-20% by weight and preferably 3-10% by weight to replace all or a portion of oil, fats, or eggs. The hemicellulose at this weight percentage will form a stable emulsion product having a viscosity greater than the viscosity of an equivalent amount by weight of the oil, fats, or eggs used in conventional products. This allows the replacement of a greater weight percentage of these substances with hemicellulose, with the remainder of the weight replaced by water or other non-caloric or low calorie filler. The resulting product has a reduced calorie content.

A low-fat mayonnaise substitute can he produced including hemicellulose which has a consistency coefficient, flow behavior index and stability similar to conventional mayonnaises and salad dressings. The hemicellulose also imparts a fat-like texture and mouthfeel to the product.

A typical low-fat mayonnaise substitute, excluding egg, preferably has the following formula:

| Ingredient | Weight Percent |
|---|---|
| Salad Oil | 1-40 |
| Hemicellulose | 3-10 |
| Vinegar (100 grain) | 4-6 |
| Salt | 0-2 |
| Sugar | 0-2 |
| Water, Spices, Emulsifiers, Preservatives | 40-92 |

The amounts of all ingredients other than hemicellulose may be adjusted in accordance with desired characteristics. An especially preferred mayonnaise substitute product has the following formula:

| Ingredient | Weight Percent |
|---|---|
| Salad Oil | 30 |
| Hemicellulose | 6 |
| Vinegar (100 grain) | 4 |
| Salt | 1 |
| Sugar | 1 |
| Water, Spices, Emulsifiers, and Preservatives | 58 |

A mayonnaise substitute product including egg may also be made. The formula for a typical product is:

| Ingredient | Weight Percent |
|---|---|
| Salad Oil | 1-40 |
| Hemicellulose | 3-10 |
| Vinegar (100 grain) | 4-6 |
| Egg Yolk (Dry) | 0.01-3 |
| Salt | 1 |
| Water, Spices, Emulsifiers, and Preservatives | 40-91 |

These products may also include other substances conventionally found in mayonnaise substitute products.

Conventional mayonnaise substitutes include 70 to 85% salad oil. The properties of mayonnaise substitutes containing hemicellulose are comparable with conventional mayonnaises and salad dressings. The mayonnaise substitutes preferably contain hemicellulose obtained from wheat bran. The hemicellulose has an average molecular weight of 300,000.

The emulsion stability under centrifuge of commercial mayonnaise as compared to mayonnaise substitutes of the present invention containing hemicellulose are compared in Table 1. The emulsion volume index is a measure of the resistance of the emulsion phase to compression during centrifugation. The emulsion rating is a subjective measure of emulsion stability, based on a 1-100 continuum, with such factors as consistency and texture of the emulsion taken into account.

**TABLE 1**

| Sample | Emulsion Volume Index | Emulsion Rating |
|---|---|---|
| Kraft Miracle Whip® Salad Dressing | 2.94 | 98 |
| Kraft Real Mayonnaise | 2.93 | 97 |
| Hidden Valley Ranch Dressing® | 2.43 | 81 |
| Henri's Creamy Italian® | 2.77 | 93 |
| Mayonnaise Substitute without egg and 3.75% Hemicellulose | 2.75 | 91 |
| Mayonnaise Substitute without egg and 5% Hemicellulose | 2.97 | 99 |
| Mayonnaise Substitute without egg and 7.5% Hemicellulose | 2.99 | 99 |
| Mayonnaise Substitute without egg and 10.0% Hemicellulose | 2.99 | 99 |

In Table 2, the flow behavior properties of commercial mayonnaises and salad dressings are compared with the properties of mayonnaise substitutes containing hemicellulose. Consistency coefficient measures the index of viscosity while flow behavior index measures the effects of shear on the viscosity.

**TABLE 2**

| Sample | Consistency Coefficient | Flow Behavior Index |
|---|---|---|
| Kraft Miracle Whip® Salad Dressing | 1.65 | 0.43 |
| Kraft Real Mayonnaise | 1.14 | 0.54 |
| Hidden Valley Ranch Dressing® | 1.22 | 0.38 |
| Henri's Creamy Italian® | 1.09 | 0.35 |
| Mayonnaise Substitute without egg and 3.75% Hemicellulose | 0.73 | 0.45 |
| Mayonnaise Substitute without egg and 5.0% Hemicellulose | 1.14 | 0.38 |
| Mayonnaise Substitute without egg and 7.5% Hemicellulose | 1.34 | 0.45 |
| Mayonnaise Substitute without egg and 10% Hemicellulose | 1.75 | 0.40 |

Thus, it can be seen that mayonnaise substitutes using hemicellulose can be made having similar characteristics of commercially available mayonnaises and salad dressings.

The emulsion stability of the hemicellulose can also be seen from observation of storage over various periods of time at 37°C. In phase separation, the oil in the mayonnaise would separate out. Table 3 shows phase separation of mayonnaise substitutes as compared with commercially available mayonnaises and salad dressings:

**TABLE 3**

| Sample | Emulsion Phase Separation | | | |
|---|---|---|---|---|
| | 3 Days | 14 Days | 35 Days | 42 Days |
| Kraft Miracle Whip Light® Salad Dressing | - | - | + | + |
| Parade Mayonnaise | - | - | - | - |
| CRS Mayonnaise | - | - | Not Tested | Not Tested |
| Kraft Real Mayonnaise | + | + | + | + |
| Mayonnaise Substitute without Egg and 3.75% Hemicellulose | + | + | + | + |
| Mayonnaise Substitute without Egg and 5.0% Hemicellulose | - | - | + | + |
| Mayonnaise Substitute without Egg and 7.5% Hemicellulose | - | - | - | - |
| Mayonnaise Substitute without Egg and 10.0% Hemicellulose | - | - | - | - |
| + = phase separation - = no phase separation | | | | |

Preferably, mayonnaise substitutes and salad dressings of the present invention will include 5-10% hemicellulose.

Hemicellulose can also be used in the preparation of low-fat dips. Such dips will typically have the following formula:

| Ingredient | Weight Percent |
|---|---|
| Hemicellulose | 3-10% |
| Salad Oil | 5% |
| Vinegar (100 grain) | 5% |
| Buttermilk Powder | 2% |
| Sugar | 1% |
| Salt | 1% |
| Water, onion, garlic, spices, emulsifiers, and preservatives | 76-83% |

The dips may also include other substances conventionally present in commercially available dips. Conventional dips include 10 to 25% salad oil.

Flow behavior properties of the dip including hemicellulose were compared with the properties of commercial dips, as shown in Table 4:

**TABLE 4**

| Sample | Consistency Coefficient | Flow Behavior Index |
|---|---|---|
| Land O'Lakes Lean Crew Dip™ | 1.72 | 0.199 |
| Dean Foods Green Onion Dip™ | 0.84 | 0.267 |
| Dip Including 6% Hemicellulose with Spices | 1.38 | 0.375 |
| Dip Including 6% Hemicellulose with Spices and 2% Starch | 1.30 | 0.468 |
| Dip Including 4% Hemicellulose | 1.09 | 0.409 |

The rheological properties of the dips which included hemicellulose were found to be within the range of commercial dips.

Other products which may be made using hemicellulose include pourable salad dressings, sour cream substitutes, whipped cream substitutes, bread spreads, and sauces. Preferred ranges for these products are listed in Table 5:

**TABLE 5**

| Product | Percentage by Weight Hemicellulose |
|---|---|
| Pourable Salad Dressing | 2-6% |
| Sour Cream Substitutes | 6-12% |
| Whipped Cream Substitute | 4-8% |
| Bread Spread | 2-6% |
| Sauces | 2-5% |

Other products which may be made with hemicellulose as a substitute for fats include butter substitutes, cheeses and margarines.

The principle of the invention and the best mode contemplated for applying that principle have been described. It is to be understood that the foregoing examples are illustrative only and that other means and techniques can be employed without departing from the true scope of the invention defined in the following claims.

## Claims

1. A food product comprising an emulsion including 1-20% by weight hemicellulose.

2. The food product of Claim 1 wherein said hemicellulose provides the functional properties of 1 to 100% by weight fat.

3. The food product of Claim 1, said food product selected from the group consisting of mayonnaise substitutes, salad dressings, butter substitutes, cheeses, dips, sour cream substitutes, whipped toppings, spreads, and sauces.

4. The food product of Claim 3 comprising a mayonnaise substitute.

5. The mayonnaise substitute food product of Claim 4 comprising:
about 1 to 40% by weight salad oil;
3 to 10% by weight hemicellulose;
about 4 to 6% by weight vinegar;
about 0 to 2% by weight salt;
about 0 to 2% by weight sugar; and
about 40 to 92% by weight water, spices, emulsifiers and preservatives.

6. The mayonnaise substitute food product of Claim 5 also comprising 0.01 to 4% egg.

7. A mayonnaise substitute food product of Claim 5 comprising 5-10% hemicellulose.

8. The food product of Claim 1 comprising a pourable salad dressing.

9. The pourable salad dressing of Claim 8 comprising:
about 0 to 6% by weight salad oil;
about 2 to 10% by weight vinegar;
2 to 20% by weight hemicellulose;
about 2 to 4% by weight salt; and
about 60 to 94% by weight water, spices, emulsifiers and preservatives.

10. The pourable salad dressing of Claim 9 comprising 2 to 6% by weight hemicellulose.

11. The food product of Claim 1 comprising a dip.

12. The dip food product of Claim 11 comprising:
2 to 20% by weight hemicellulose;
about 0 to 6% by weight salad oil;
about 2 to 10% by weight vinegar;
about 0 to 2% by weight buttermilk powder;
about 0 to 1% by weight salt;
about 0 to 1% by weight sugar; and
about 60 to 96% by weight water, spices, garlic, onion, emulsifiers and preservatives.

13. The dip food product of Claim 12 comprising 5-10% by weight hemicellulose.

14. The food product of Claim 1 comprising a bread spread.

15. The bread spread of Claim 14 comprising:
2 to 20% by weight hemicellulose;
about 0 to 8% by weight salad oil;
about 2 to 10% by weight vinegar;
about 2 to 6% by weight parmesan cheese powder;
about 2 to 4% by weight garlic powder; and
about 52 to 92% by weight water, spices, emulsifiers and preservatives.

16. The bread spread of Claim 15 comprising 2 to 6% by weight hemicellulose.

17. The food product of Claim 1 comprising a sour cream substitute.

18. The sour cream substitute of Claim 17 comprising 6-12% by weight hemicellulose.

19. The food product of Claim 1 comprising a whipped cream substitute.

20. The whipped cream substitute of Claim 19 comprising 4-8% by weight hemicellulose.

21. The food product of Claim 1 comprising a sauce.

22. The sauce of Claim 21 comprising 2-5% by weight hemicellulose.

23. The food product of Claim 1 wherein said hemicellulose is selected from the group consisting of a hemicellulose A, a hemicellulose B, hemicellulose A or hemicellulose B modified by enzymatic treatment, or any mixtures thereof.

24. The food product of Claim 1 further comprising emulsifiers, preservatives, or other substances conventionally found in said food products.

25. The food product of Claim 23 wherein said hemicellulose is derived from wheat bran, corn bran, barley bran, barley hulls, oat bran, or oat hulls.

26. The food product of Claim 1 wherein said emulsion food product is in solid form.

27. The food product of Claim 1 wherein said emulsion food product is in semi-solid form.

28. The food product of Claim 1 wherein said emulsion food product is in liquid form.

## Patentansprüche

1. Nahrungsmittel-Erzeugnis, umfassend eine 1 bis 20 Gew.-% Hemicellulose enthaltende Emulsion.

2. Nahrungsmittel-Erzeugnis nach Anspruch 1, worin die Hemicellulose die funktionellen Eigenschaften von 1 bis 100 Gew.-% Fett verfügbar macht.

3. Nahrungsmittel-Erzeugnis nach Anspruch 1, ausgewählt aus der aus Mayonnaise-Ersatzstoffen, Salat-Dressings, Butter-Ersatzstoffen, Käsearten, Dips, Ersatzstoffen für saure Sahne, Garnitur-Schlagcremes, Brotaufstrichen und Saucen bestehenden Gruppe.

4. Nahrungsmittel-Erzeugnis nach Anspruch 3, umfassend einen Mayonnaise-Ersatzstoff.

5. Mayonnaise-Ersatzstoff nach Anspruch 4, umfassend
etwa 1 bis 40 Gew.-% Salatöl;
3 bis 10 Gew.-% Hemicellulose;
etwa 4 bis 6 Gew.-% Essig;
etwa 0 bis 2 Gew.-% Salz;
etwa 0 bis 2 Gew.-% Zucker; und
etwa 40 bis 92 Gew.-% Wasser, Gewürze, Emulgatoren und Konservierungsstoffe

6. Mayonnaise-Ersatzstoff nach Anspruch 5, umfassend
0,01 bis 4 % Ei.

7. Mayonnaise-Ersatzstoff nach Anspruch 5, umfassend
5 bis 10 Gew.-% Hemicellulose.

8. Nahrungsmittel-Erzeugnis nach Anspruch 1, umfassend ein gießbares Salat-Dressing.

9. Gießbares Salat-Dressing nach Anspruch 8, umfassend
etwa 0 bis 6 Gew.-% Salatöl;
etwa 2 bis 10 Gew.-% Essig;
2 bis 20 Gew.-% Hemicellulose;
etwa 2 bis 4 Gew.-% Salz; und
etwa 60 bis 94 Gew.-% Wasser, Gewürze, Emulgatoren und Konservierungsstoffe.

10. Gießbares Salat-Dressing nach Anspruch 9, umfassend
2 bis 6 Gew.-% Hemicellulose.

11. Nahrungsmittel-Erzeugnis nach Anspruch 1, umfassend ein Dip.

12. Dip-Nahrungsmittel nach Anspruch 11, umfassend
2 bis 20 Gew.-% Hemicellulose;
etwa 0 bis 6 Gew.-% Salatöl;
etwa 2 bis 10 Gew.-% Essig;
etwa 0 bis 2 Gew.-% Buttermilch-Pulver;
etwa 0 bis 1 Gew.-% Salz;
etwa 0 bis 1 Gew.-% Zucker; und
etwa 60 bis 96 Gew.-% Wasser, Gewürze, knoblauch, Zwiebeln, Emulgatoren und Konservierungsstoffe.

13. Dip-Nahrungsmittel nach Anspruch 12, umfassend
5 bis 10 Gew.-% Hemicellulose.

14. Nahrungsmittel-Erzeugnis nach Anspruch 1, umfassend einen Brotaufstrich.

15. Brotaufstrich-Nahrungsmittel nach Anspruch 14, umfassend
2 bis 20 Gew.-% Hemicellulose;
etwa 0 bis 8 Gew.-% Salatöl;
etwa 2 bis 10 Gew.-% Essig;
etwa 2 bis 6 Gew.-% Parmesankäse-Pulver;
etwa 2 bis 4 Gew.-% Knoblauch-Pulver; und
etwa 52 bis 92 Gew.-% Wasser, Gewürze, Emulgatoren und Konservierungsstoffe.

16. Brotaufstrich-Nahrungsmittel nach Anspruch 15, umfassend
2 bis 6 Gew.-% Hemicellulose.

17. Nahrungsmittel-Erzeugnis nach Anspruch 1, umfassend einen Ersatzstoff für saure Sahne.

18. Ersatzstoff für saure Sahne nach Anspruch 17, umfassend
6 bis 12 Gew.-% Hemicellulose.

19. Nahrungsmittel-Erzeugnis nach Anspruch 1, umfassend einen Schlagsahne-Ersatzstoff

20. Schlagsahne-Ersatzstoff nach Anspruch 19, umfassend
4 bis 8 Gew.-% Hemicellulose.

21. Nahrungsmittel-Erzeugnis nach Anspruch 1, umfassend eine Sauce.

22. Sauce nach Anspruch 21, umfassend
2 bis 5 Gew.-% Hemicellulose.

23. Nahrungsmittel-Erzeugnis nach Anspruch 1, worin die Hemicellulose aus der aus Hemicellulose A, Hemicellulose B, einer durch enzymatische Behandlung modifizierten Hemicellulose A oder B oder einer beliebigen Mischung aus diesen bestehenden Gruppe ausgewählt ist.

24. Nahrungsmittel-Erzeugnis nach Anspruch 1, weiterhin umfassend Emulgatoren, Konservierungsstoffe oder andere Substanzen, die üblicherweise in den genannten Nahrungsmittel-Erzeugnissen gefunden werden.

25. Nahrungsmittel-Erzeugnis nach Anspruch 23, worin die Hemicellulose aus Weizenkleie, Maiskleie, Gerstenkleie, Gerstenhülsen, Haferkleie oder Haferhülsen stammt.

26. Nahrungsmittel-Erzeugnis nach Anspruch 1, worin das Emulsions-Nahrungsmittel-Erzeugnis in fester Form vorliegt.

27. Nahrungsmittel-Erzeugnis nach Anspruch 1, worin das Emulsions-Nahrungsmittel-Erzeugnis in halbfester Form vorliegt.

28. Nahrungsmittel-Erzeugnis nach Anspruch 1, worin das Emulsions-Nahrungsmittel-Erzeugnis in flüssiger Form vorliegt.

## Revendications

1. Produit alimentaire comprenant une émulsion comportant 1 à 20% en poids d'hémicellulose.

2. Produit alimentaire selon la revendication 1, dans lequel ladite hémicellulose assure les propriétés fonctionelles de 1 à 100 % en poids de matières grasses.

3. Produit alimentaire selon la revendication 1, ledit produit alimentaire étant sélectionné dans le groupe constitué par des substituts de mayonnaise, des sauces de salade, des substituts de beurre, des fromages, des "dips", des substituts de crème aigre, de la crème fouettée, des mets à tartiner et des sauces.

4. Produit alimentaire selon la revendication 3, comprenant un substitut de mayonnaise.

5. Produit alimentaire constitué par un substitut de mayonnaise selon la revendication 4, comprenant :
1 à 40 % en poids environ d'huile à salade ;
3 à 10 % en poids d'hémicellulose ;
4 à 6 % en poids environ de vinaigre ;
0 à 2 % en poids environ de sel ;
0 à 2% en poids environ de sucre ; et
40 à 92 % en poids environ d'eau, d'épices, d'émulsifiants et d'agents de conservation.

6. Produit alimentaire constitué par un substitut de mayonnaise selon la revendication 5, comprenant également 0,01 à 4% d'oeuf.

7. Produit alimentaire constitué par un substitut de mayonnaise selon la revendication 5, comprenant 5 à 10 % d'hémicellulose.

8. Produit alimentaire selon la revendication 1, comprenant une sauce de salade versable.

9. Sauce de salade versable selon la revendication 8, comprenant :
0 à 6 % en poids environ d'huile à salade ;
2 à 10 % en poids environ de vinaigre ;
2 à 20 % en poids d'hémicellulose ;
2 à 4 % en poids environ de sel ; et
60 à 94 % en poids environ d'eau, d'épices, d'émulsifiants et d'agents de conservation.

10. Sauce de salade versable selon la revendication 9, comprenant 2 à 6 % en poids d'hémicellulose.

11. Produit alimentaire selon la revendication 1, comprenant un "dip".

12. Produit alimentaire constitué par un "dip" selon la revendication 11, comprenant :
2 à 20 % en poids d'hémicellulose ;
0 à 6 % en poids environ d'huile à salade ;
2 à 10 % en poids environ de vinaigre ;
0 à 2 % en poids environ de lait de beurre en poudre ;
0 à 1 % en poids environ de sel ;
0 à 1 % en poids environ de sucre ; et
60 à 96 % en poids environ d'eau, d'épices, d'ail, d'oignon, d'émulsifiants et d'agents de conservation.

13. Produit alimentaire constitué par un "dip" selon la revendication 12, comprenant 5 à 10 % en poids d'hémicellulose.

14. Produit alimentaire selon la revendication 1, comprenant un mets à tartiner sur du pain.

15. Mets à tartiner sur du pain selon la revendication 14, comprenant :
2 à 20 % en poids d'hémicellulose ;
0 à 8 % en poids environ d'huile à salade;
2 à 10 % en poids environ de vinaigre ;
2 à 6 % en poids environ de parmesan en poudre ;
2 à 4 % en poids environ d'ail en poudre ; et
52 à 92 % en poids enviton d'eau, d'épices, d'émulsifiants et d'agents de conservation.

16. Mets à tartiner sur du pain selon la revendication 15, comprenant 2 à 6 % en poids d'hémicellulose.

17. Produit alimentaire selon la revendication 1, comprenant un substitut de crème aigre.

18. Substitut de crème aigre selon la revendication 17, comprenant 6 à 12 % en poids d'hémicellulose.

19. Produit alimentaire selon la revendication 1, comprenant un substitut de crème fouettée.

20. Substitut de crème fouettée selon la revendication 19, comprenant 4 à 8% en poids d'hémicellulose.

21. Produit alimentaire selon la revendication 1, comprenant une sauce.

22. Sauce selon la revendication 21, comprenant 2 à 5 % en poids d'hémicellulose.

23. Produit alimentaire selon la revendication 1, dans lequel ladite hémicellulose est sélectionée dans le groupe constitué par l'hémicellulose A, l'hémicellulose B, l'hémicellulose A ou l'hémicellulose B modifiées par traitement enzymatique ou tous leurs mélanges.

24. Produit alimentaire selon la revendication 1, comprenant en outre émulsifiants, agents de conservation et autres substances conventionnellement contenues dans lesdits produits alimentaires.

25. Produit alimentaire selon la revendication 23, dans lequel ladite hémicellulose provient de son de froment, de son de maïs, de son d'orge, de balles d'orge ou de balles d'avoine.

26. Produit alimentaire selon la revendication 1, dans lequel ledit produit alimentaire en émulsion se trouve à la forme solide.

27. Produit alimentaire selon la revendication 1, dans lequel ledit produit alimentaire en émulsion se trouve à la forme semi-solide.

28. Produit alimentaire selon la revendication 1, dans lequel ledit produit alimentaire en émulsion se trouve à la forme liquide.
